# EUROPÄISCHE PATENTSCHRIFT

(11) **EP 2 404 793 B1**
(45) Veröffentlichungstag und Bekanntmachung des Hinweises auf die Patenterteilung: **26.09.2018**
(21) Anmeldenummer: 11170189.2
(22) Anmeldetag: 16.06.2011
(51) Int. Cl.: B60S 3/00, B65G 19/02

(54) **Förderbandeinrichtung zum Transportieren eines Fahrzeugs, Förderband, Waschstraße und Verfahren zum Transportieren eines Fahrzeugs**
Conveyor belt for transporting a vehicle, conveyor belt, wash tunnel and method for transporting a vehicle
Dispositif de bande de transport pour le transport d'un véhicule, bande de transport, voie de lavage et procédé de transport d'un véhicule

(30) Priorität: 08.07.2010 DE 102010027200
(43) Veröffentlichungstag der Anmeldung: 11.01.2012
(73) Patentinhaber: Holz Autowaschtechnik GmbH, 89250 Senden (DE)
(72) Erfinder: Holz, Andreas, 89250 Senden (DE)
(74) Vertreter: Patentanwälte Ruff, Wilhelm, Beier, Dauster & Partner mbB

(56) Entgegenhaltungen:
- EP-A2- 1 153 813
- CA-A1- 1 046 851
- DE-A1-102008 014 072
- US-B1- 6 186 073

## Beschreibung

Die Erfindung betrifft eine Förderbandeinrichtung zum Transportieren eines Fahrzeugs, ein Förderband für eine Förderbandeinrichtung, eine Waschstraße mit einer Förderbandeinrichtung und ein Verfahren zum Transportieren eines Fahrzeugs durch eine Fahrzeugbehandlungsanlage.

Bei einer Fahrzeugbehandlungsanlage handelt es sich beispielsweise um eine sogenannte Waschstraße, bei welcher Fahrzeuge mittels einer Förderbandeinrichtung entlang verschiedener Reinigungs- und/oder Behandlungseinrichtungen befördert werden. Die Reinigungs- und/oder Behandlungseinrichtungen sind üblicherweise stationär angeordnet. Für eine bessere Reinigung ist es weiter bekannt, die Reinigungs- und/oder Behandlungseinrichtungen derart anzuordnen, dass sie dem Fahrzeug über einen begrenzten Abschnitt folgen. Weitere Fahrzeugbehandlungsanlagen sind Montageanlagen, Fahrzeugswartungsanlagen oder dergleichen.

Für einen Transport der Fahrzeuge sind Endlosförderketten mit daran angebrachten Transportrollen bekannt. Die Transportrollen hintergreifen ein lenkbares Rad des Fahrzeugs, sodass das Rad auf einer Fahrbahn abrollt. Seitlich der Fahrbahn sind feststehenden Schienen angeordnet, welche eine Bewegung des Rads seitlich begrenzen. Entsprechende Transportvorrichtungen sind beispielsweise aus EP 1 153 813 A2, CA 1 046 851 A1 oder US 6,186,073 B1 bekannt.

Als Förderbänder sind weiter sogenannte Plattenförderbänder bekannt, umfassend mehrere in Förderbandeinrichtung aufeinanderfolgend angeordnete Förderplatten. Die Förderplatten sind beispielsweise aus Kunststoff gefertigt. Derartige Förderplatten werden auch als Kunststoffmodule bezeichnet. Entsprechend werden die daraus gebildeten Förderbänder als Kunststoffmodulförderbänder bezeichnet.

Üblicherweise ist in einer Waschstraße ein Förderband vorgesehen, auf welchem die Räder einer Seite des Fahrzeugs platziert werden. Die Räder der zweiten Seite laufen passiv oder aktiv angetrieben mit. Dadurch ist es möglich, Fahrzeuge mit unterschiedlichen Spurbreiten durch die Waschstraße zu befördern. In anderen Ausgestaltungen sind zwei parallele Förderbänder zum Bewegen der Fahrzeuge vorgesehen. Um zu verhindern, dass die Räder aufgrund der einwirkenden Kräfte beim Reinigen von dem Förderband laufen, ist es bekannt, quer zur Förderrichtung angeordnete Mitnehmer und längs zur Förderrichtung angeordnete Seitenführungen vorzusehen. Ein entsprechendes Förderband ist beispielsweise in DE 10 2008 014 072 A1 beschrieben, welches auch den Oberbegriff des Anspruchs 1 offenbart.

Förderbänder für Waschstraßen weisen viele Vorteile auf. Insbesondere kommt es bei Kunststoffmodulförderbändern nur in Ausnahmefällen zu Beschädigungen von Felgen. Als nachteilig hat sich jedoch ein Reinigungsergebnis der Felgen herausgestellt. Insbesondere in sogenannten Expresswaschanlagen mit längsliegenden Rad- und Schwellerwäschern ist ein Reinigungsergebnis an den durch das Förderband bewegten, nichtdrehenden Rädern nicht immer zufriedenstellend.

Es ist daher eine Aufgabe der Erfindung, eine Förderbandeinrichtung für eine Fahrzeugsbehandlungsanlage, insbesondere eine Waschstraße, mit verbesserten Behandlungsmöglichkeiten zu schaffen. Es sind weitere Aufgaben der Erfindung ein Förderband für eine Förderbandeinrichtung, eine Waschstraße mit einer Förderbandeinrichtung und ein Verfahren zum Transportieren eines Fahrzeugs durch eine Fahrzeugbehandlungsanlage zu schaffen.

Die Aufgabe wird gelöst durch die Gegenstände mit den Merkmalen der Ansprüche 1, 10, 13 und 14.

Gemäß einem Aspekt wird die Aufgabe gelöst durch eine Förderbandeinrichtung zum Transportieren eines Fahrzeugs durch eine Fahrzeugbehandlungsanlage, insbesondere zum Transportieren eines Fahrzeugs durch eine Waschstraße, umfassend ein Förderband, auf welchem Räder wenigstens einer Seite eines transportierten Fahrzeugs für einen Transport stehen, mindestens eine Hubeinrichtung, mittels welcher das transportierte Fahrzeug in mindestens einem Schleppbetrieb-Abschnitt der Fahrzeugbehandlungsanlage relativ zu dem Förderband in eine Hubrichtung bewegbar ist, sodass das die Räder des transportierten Fahrzeugs außer Kontakt mit dem Förderband kommen, und mindestens eine Mitnehmerrolle, mittels welcher das transportierte Fahrzeug über den Schleppbetrieb-Abschnitt mit rollenden Rädern bewegbar ist.

Das transportierte Fahrzeug weist je nach Fahrzeugtyp zwei oder mehr Achsen mit zugehörigen Rädern auf. In vorteilhaften Ausgestaltungen ist das Förderband so dimensioniert, dass die Räder einer Seite des Fahrzeugs auf dem Förderband aufstehen. Es ist jedoch auch denkbar, das Förderband derart zu dimensionieren, dass das gesamte Fahrzeug auf dem Förderband aufsteht. Bei Transport des Fahrzeugs stehen die auf dem Förderband stehenden Räder still. Als stillstehende Räder werden im Zusammenhang mit der Erfindung Räder bezeichnet, welche keine Rotation für eine Vor- oder Rückwärtsbewegung des Fahrzeugs ausführen. Kleine Ausweichbewegungen der Räder aufgrund der einwirkenden Kräfte sind dabei durchaus möglich. Mittels der Hubeinrichtung wird das Fahrzeug quer zu dem Förderband bewegt und so von dem Förderband entkoppelt. Die Bewegung quer zur Förderrichtung ist dabei in vorteilhaften Ausgestaltungen auf einen kurzen Einlaufbereich des Schleppbetrieb-Abschnitts beschränkt. Das von dem Förderband entkoppelte Fahrzeug wird erfindungsgemäß durch die Mitnehmerrolle über dem Schleppbetrieb-Abschnitt bewegt. Das Fahrzeug wird dabei geschleppt, wobei die Räder für eine Fahrzeugbewegung zu einer Rotation angetrieben sind. Die Mitnehmerrolle ist vorzugsweise zum Transport des Fahrzeugs mittels des Förderbands hinter mindestens einem Rad des Fahrzeugs angeordnet und stützt das Rad bei der Bewegung durch das Förderband gegen einwirkende Kräfte ab.

Dadurch ist es möglich, die Förderbandeinrichtung in einer Waschstraße mit herkömmlichen stationär angeordnete Einrichtungen zur Reifenpflege mit gutem Reinigungsergebnis für beide Fahrzeugseiten einzusetzen. Die Einrichtung zur Reifenpflege ist in einer Ausgestaltung gemäß DE 20 2006 006 200 U1 ausgebildet, auf deren Inhalt hiermit voll umfänglich Bezug genommen wird. In anderen Ausgestaltungen sind alternative Einrichtungen für eine Reifenpflege vorgesehen.

In einer vorteilhaften Ausgestaltung der Erfindung ist vorgesehen, dass das Förderband mindestens zwei, vorzugsweise drei, durch sich in Förderrichtung erstreckende Schlitze beabstandete Bandstränge aufweist. Die Schlitze erlauben es, dass die Hubeinrichtung durch das Förderband greift, um das Fahrzeug anzuheben. Die Bandstränge können jeweils unterschiedliche Breiten aufweisen. Bei einer Ausgestaltung mit drei Bandsträngen ist es dabei möglich, durch eine variierende Breite des mittleren Strangs verschiedene Bandbreiten des Förderbands zu realisieren.

Die Bandstränge sind in einer Ausgestaltung jeweils durch separate Antriebsmittel angetrieben, wobei die Antriebsmittel synchronisiert sind. In einer vorteilhaften Weiterbildung ist vorgesehen, dass die Bandstränge mittels Kopplungsmitteln mechanisch wirkverbunden. Dadurch ist es möglich, die Bandstränge mittels einem Antriebsmittel anzutreiben.

In einer vorteilhaften Ausgestaltung sind die Kopplungsmittel zumindest teilweise durch die mindestens eine Mitnehmerrolle gebildet. In anderen Worten fungiert dabei die Mitnehmerrolle als Kopplungsmittel, wobei je nach Ausgestaltung weitere Kopplungsmittel vorgesehen sind.

In einer Weiterbildung weist mindestens ein Bandstrang ein seitliches Führungselement zum seitlichen Abstützen eines Rads auf. Vorzugsweise sind zwei seitliche Führungselemente vorgesehen, welche eine Fahrzeuglaufbegrenzung bewirken. Die Führungselemente weisen in einer Ausgestaltung eine Anlaufschräge auf.

In vorteilhaften Ausgestaltungen ist eine den Rädern zugewandte Seite der Führungselemente konvex und/oder konkav gebogen und/oder stufenförmig gestaltet.

Die mindestens eine Mitnehmerrolle ist für eine Bewegung in Förderrichtung angetrieben. Die mindestens eine Mitnehmerrolle ist dabei in einer Ausgestaltung mittels einer eigenen Antriebseinrichtung angetrieben. In einer vorteilhaften Ausgestaltung steht das Förderband mit der mindestens einen Mitnehmerrolle in antreibender Wirkverbindung, sodass die Mitnehmerrolle mittels des Förderbands zur Bewegung in Förderrichtung angetrieben ist. Dadurch ist ein Synchronlauf sichergestellt und die Anzahl der Antriebseinrichtungen gering gehalten.

Die mindestens eine Mitnehmerrolle ist in einer Ausgestaltung translationsfest und um die eigene Achse rotierbar mit dem Förderband verbunden. In anderen Ausgestaltungen ist die Mitnehmerrolle wahlweise verschieblich oder translatorisch fixiert mit dem Förderband verbunden, sodass die Mitnehmerrolle wahlweise von einer Translationsbewegung des Förderbands entkoppelbar ist. Dadurch ist es möglich, dass ein Transport des Fahrzeugs an einer bestimmten Position der Fahrzeugbehandlungsanlage unterbrochen wird und erst durch Kopplung der Mitnehmerrolle mit dem Förderband das Fahrzeug wieder in Förderrichtung transportiert wird. Insbesondere bei Waschstraßen ist jedoch üblicherweise keine Entkopplung gewünscht, um einen festen Fahrzeugabstand beizubehalten.

Die Hubeinrichtung weist in vorteilhaften Ausgestaltungen mindestens eine Leiste auf, welche durch einen Schlitz zwischen zwei Bandsträngen des Förderbands geführt ist. Durch Bewegung des Fahrzeugs auf die Leiste wird das Fahrzeug von dem Förderband für eine Bewegungsübertragung entkoppelt. Vorzugsweise umfasst die Hubeinrichtung mehrere, vorzugsweise zwei parallel beabstandete Leisten. Dadurch ist es möglich, die Breite der einzelnen Leisten gering zu halten und dennoch eine stabile Bewegung des Fahrzeugs über die Leisten zu gewährleisten. Der Abstand der Leisten ist dabei derart gewählt, dass auch Fahrzeuge mit geringer Reifengröße auf den Leisten sicher geführt sind.

Die Leisten weisen in vorteilhaften Ausgestaltungen wenigstens an einem in Förderrichtung vorne angeordneten Bereich eine Einlaufschräge auf. Vorzugsweise ist auch in einem Endbereich eine Schräge vorgesehen. Die Neigung der Schräge ist dabei derart gewählt, dass das Fahrzeug ohne störende Kräfte von dem Förderband angehoben und auf das Förderband zurückgesetzt wird.

Gemäß einem weiteren Aspekt der Erfindung wird ein Förderband für eine Förderbandeinrichtung geschaffen, umfassend mehrere, in Förderrichtung aufeinanderfolgend angeordnete Förderplatten. Die Förderplatte sind in vorteilhaften Ausgestaltungen aus Kunststoff, insbesondere als Spritzgussteile hergestellt. An den Seitenrändern weisen die Förderplatte vorzugsweise Seitenführungen auf. Die Förderplatten sind gelenkig verbunden. Vorzugsweise ist das Förderband als Endlosband gestaltet. Das Förderband wird durch Antriebsrollen angetrieben. In einer Ausgestaltung weisen die Antriebsrollen vorstehende Zähne auf, welche in Ausnehmungen der Förderplatten für einen Antrieb eingreifen.

Die einzelnen Förderplatten weisen quer zur Förderrichtung in vorteilhaften Ausgestaltungen Unterbrechungen auf, sodass beim Aneinanderreihen der Förderplatten Bandstränge gebildet werden.

In einer weiteren vorteilhaften Ausgestaltung ist an mindestens einer Förderplatte eine Mitnehmerrolle angeordnet. Die Mitnehmerrolle ist dabei vorzugsweise translatorisch feststehend und um die eigene Achse drehbar mit der Förderplatte verbunden.

Die Aufgabe wird weiter gelöst durch eine Waschstraße für Fahrzeuge mit einer erfindungsgemäßen Förderbandeinrichtung. Die Waschstraße weist vorzugsweise verschiedene Stationen für eine automatische oder manuelle Fahrzeugbehandlung auf.

Nicht zuletzt wird die Aufgabe durch ein Verfahren zum Transportieren eines Fahrzeugs durch eine Fahrzeugbehandlungsanlage, insbesondere zum Transportieren eines Fahrzeugs durch eine Waschstraße gelöst, wobei das Fahrzeug mittels eines Förderbands transportiert wird, das Fahrzeug in mindestens einem Schleppbetrieb-Abschnitt der Fahrzeugbehandlungsanlage relativ zu dem Förderband in eine Hubrichtung bewegt wird, sodass das die Räder des Fahrzeugs außer Kontakt mit dem Förderband kommen, und das Fahrzeug über den Schleppbetrieb-Abschnitt mittels einer Mitnehmerrolle mit rollenden Rädern bewegt wird.

Das Verfahren hat den Vorteil, dass Einrichtungen eingesetzt werden, welche sich eine Rotation der Räder zunutze machen. Beispielsweise ist es dabei möglich, in einer Waschstraße längsliegende Rad- und Schwellerwäscher einzusetzen.

Weitere Vorteile der Erfindung ergeben sich aus den Unteransprüchen und aus der nachfolgenden Beschreibung von Ausführungsbeispielen der Erfindung, die in den Zeichnungen schematisch dargestellt sind. Für gleiche oder ähnliche Bauteile werden in den Zeichnungen einheitliche Bezugszeichen verwendet. Als Teil eines Ausführungsbeispiels beschriebene oder dargestellte Merkmale können ebenso in einem anderen Ausführungsbeispiel verwendet werden, um eine weitere Ausführungsform der Erfindung zu erhalten.

In den Zeichnungen zeigen:
- Fig. 1:: eine perspektivische Darstellung eines Ausschnitts einer erfindungsgemäßen Förderbandeinrichtung,
- Fig. 2:: eine Schnittansicht der Förderbandeinrichtung gemäß Fig. 1,
- Fig. 2a:: ein Detail II gemäß Fig. 2 in einer alternativen Ausgestaltung,
- Fig. 3:: ein Detail der Förderbandeinrichtung gemäß Fig. 1;
- Fig. 4:: eine perspektivische Darstellung eines Ausschnitts einer Waschstraße mit einer Förderbandeinrichtung gemäß Fig. 1 und
- Fig. 5:: ein Detail der Waschstraße gemäß Fig. 4.

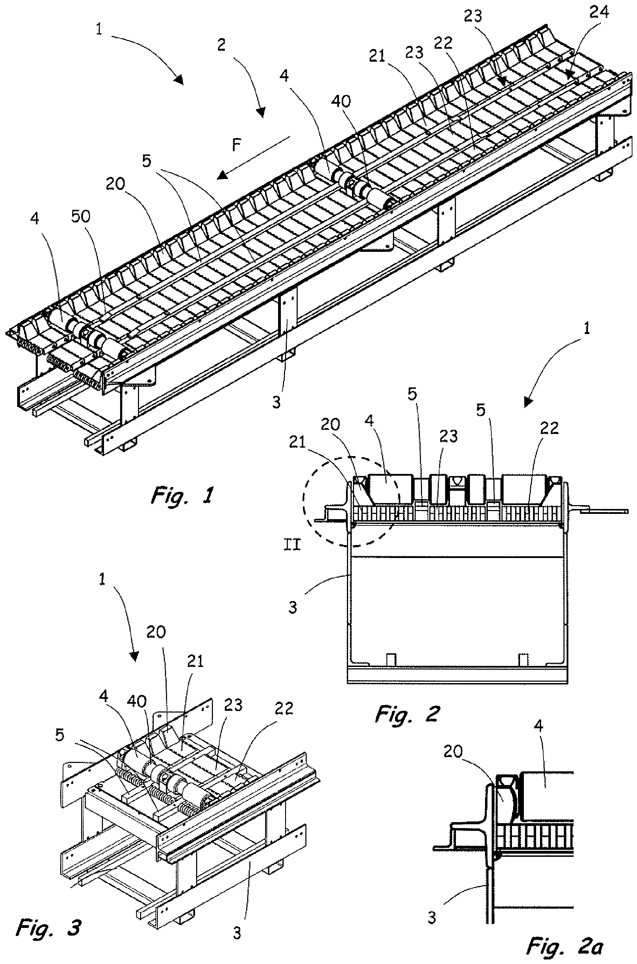

Fig. 1 zeigt schematisch einen Ausschnitt einer Förderbandeinrichtung 1 umfassend ein Förderband 2, welches auf einem Gestell 3 geführt wird. Fig. 2 zeigt schematisch einen Querschnitt durch die Förderbandeinrichtung 1 gemäß Fig. 1 und Fig. 3 zeigt ein Detail der Förderbandeinrichtung 1, wobei zur besseren Übersicht verschiedene Teile nicht dargestellt sind.

Das Förderband 2 umfasst mehrere, in einer Förderrichtung F aufeinanderfolgend angeordnete Förderplatten. Die Förderplatten sind vorzugsweise zu einem Endlosband verbunden. Für eine Bewegung des Förderbands 2 sind nicht dargestellte Antriebe und Umlenkrollen vorgesehen. Das Gestell 3 ist dabei im Einsatz üblicherweise unter einer Förderebene angeordnet.

An dem Förderband 2 sind Mitnehmerrollen 4 angeordnet, an welchen sich nicht dargestellte Räder von ebenfalls nicht dargestellten Fahrzeugen für eine Beförderung abstützen. Die Mitnehmerrollen 4 stützen dabei gemeinsam mit seitlichen Führungselementen 20 bei einem Transport mittels des Förderbands 2 mindestens ein gelenktes Rad des Fahrzeugs gegen Kräfte ab, welche bei einer Behandlung des Fahrzeugs, beispielsweise beim Reinigen einwirken.

Das Förderband 2 ist in Förderrichtung F in parallele Bandstränge geteilt. In dem dargestellten Ausführungsbeispiel sind drei parallele Bandstränge 21, 22 und 23 vorgesehen, welche durch zwei Schlitze 24, 25 beabstandet zueinander angeordnet sind. Die einzelnen Bandstränge 21, 22 und 23 sind miteinander für eine Bewegung gekoppelt. In dem dargestellten Ausführungsbeispiel dient die Mitnehmerrolle 4 auch als Kopplungselement für eine Bewegungskopplung der Bandstränge 21, 22, 23. Die Mitnehmerrolle 4 ist zu diesem Zweck mit drei Plattenteilen einer Förderplatte verbunden, welche den drei Bandsträngen 22, 22, 23 zugeordnet sind. Die Verbindung ist dabei auf beliebige Weise mittels Schrauben, Kleben, Formschluss oder anderen Verbindungstechniken realisierbar. Die Mitnehmerrolle 4 ist dabei derart angebracht, dass sie um die eigene Achse rotierbar ist.

Die Fördereinrichtung 1 umfasst weiter in einem Schleppbetrieb-Abschnitt I eine Hubeinrichtung mit zwei, sich in Förderrichtung F erstreckenden Leisten 5. Die Leisten 5 treten durch die Schlitze 24, 25 an mindestens einer Stelle der Förderbandeinrichtung 1 hindurch. Mittels der Leisten 5 werden nicht dargestellte Räder relativ zu der Förderebene des Förderbands 2 angehoben. Dadurch werden die Räder von dem Förderband 2 entkoppelt und nicht mehr durch das Förderband 2 transportiert. Die Mitnehmerrolle 4 kontaktiert in diesem Fall jedoch einen in Förderrichtung F hinten angeordneten Bereich mindestens eines Rads und bewirkt so eine schleppende Mitnahme des Fahrzeugs, wobei die Räder für eine geschleppte Bewegung des Fahrzeugs drehend bewegt werden. Dadurch ist es möglich, dass die Räder in diesem Bereich mit einer Einrichtung zusammenwirken, bei welcher eine drehende Bewegung der Räder von Vorteil ist. Beispielsweise ist es möglich, in diesem Bereich einen längsliegenden Rad- und/oder Schwellerwäscher vorzusehen.

Die dargestellten Mitnehmerrollen 4 weisen Ringnuten 40 auf, welche so ausgeformt sind, dass eine Kollision der Mitnehmerrollen 4 mit den Leisten 5 verhindert ist. In anderen Ausgestaltungen sind die Mitnehmerrollen 4 derart von der Förderebene beabstandet angeordnet, dass eine Kollision der Mitnehmerrollen 4 mit den Leisten 5 verhindert ist. Die Leisten 5 weisen an ihren Enden eine Einlaufschräge 50 und eine Auslaufschräge 51 mit geneigten Flächen auf, sodass die Räder des Fahrzeugs sanft, d.h. mit geringen oder keinen Stößen, relativ zu dem Förderband angehoben und auf dieses zurückgesetzt werden.

Die Führungselemente 20 gemäß den Fig. 1 bis 3 weisen einen keilförmigen Querschnitt auf. Fig. 2a zeigt ein Detail II gemäß Fig. 2 in einer alternativen Ausgestaltung. Das Führungselement 20 gemäß Fig. 2a weist eine konvex verlaufende Anlauffläche für nicht dargestellte Fahrzeugräder auf. In wieder anderen Ausgestaltungen sind konkav verlaufende oder stufenförmige Anlaufflächen vorgesehen, wobei scharfe Kanten und Ecken nach Möglichkeit vermieden sind.

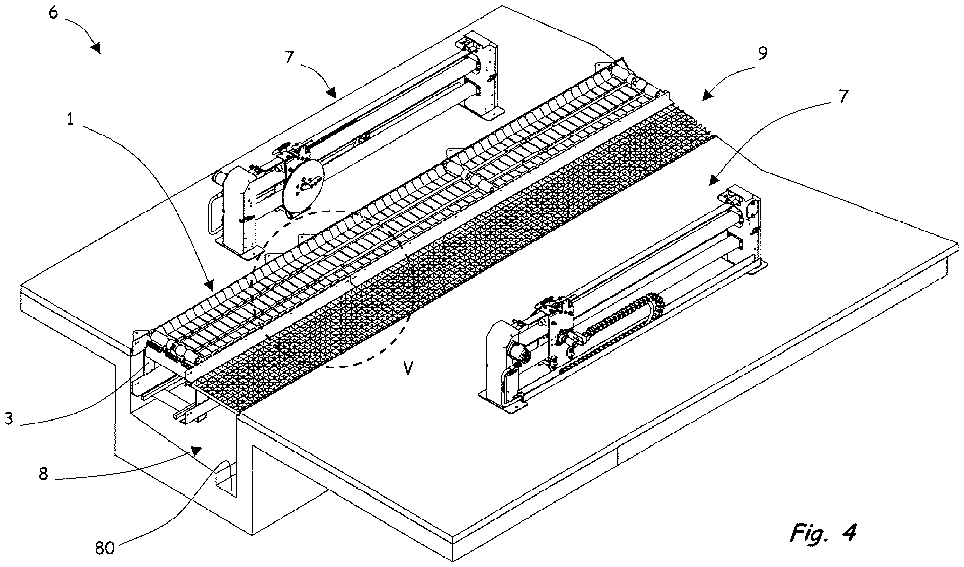

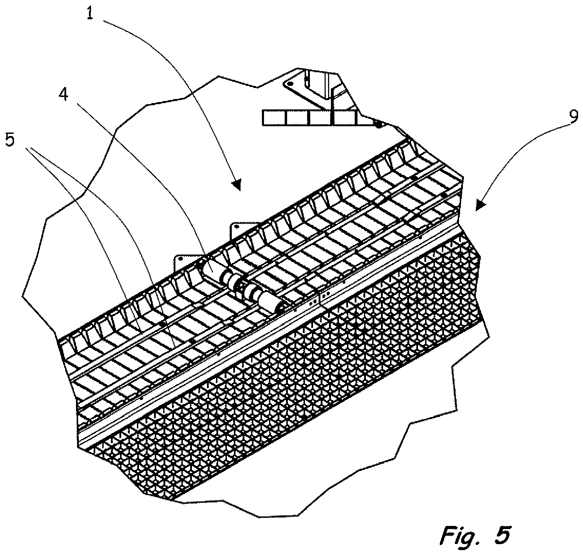

Fig. 4 zeigt schematisch eine perspektivische Darstellung eines Ausschnitts einer Waschstraße 6 mit einer erfindungsgemäßen Förderbandeinrichtung und zwei Einrichtungen 7 zur Reifenpflege, welche an zwei Fahrzeugseiten angeordnet sind. Die Darstellung der Einrichtungen 7 in Fig. 4 ist lediglich schematisch. Eine vorteilhafte Ausgestaltung der Einrichtungen ist beispielsweise in DE 20 2006 006 200 U1 beschrieben. Fig. 5 zeigt schematisch ein Detail V gemäß Fig. 4, wobei die Einrichtung 7 zur besseren Übersicht nicht dargestellt ist. Dabei ist das Förderband 1 in der Darstellung gemäß Fig. 5 relativ zu der Einrichtung 7 verstellt.

Wie in Fig. 4 und 5 erkennbar ist, ist das Gestell 3 in einer Ausnehmung 8 in einem Bodenbereich angeordnet. Neben der Förderbandeinrichtung 1 ist ein Gitter 9 angeordnet, welches einen Ablauf der bei der Reinigung anfallenden Flüssigkeiten ermöglicht. In der Ausnehmung 8 Bodenbereich ist hierfür eine Ablaufrinne 80 vorgesehen.

Wie in den Fig. 4 und 5 erkennbar ist, sind in der dargestellten Waschstraße 6 mehrere, als Schleppbetrieb-Abschnitte I gestaltete Stationen vorgesehen, an welchen die nicht dargestellten Räder mittels der Leisten 5 angehoben werden, um so eine Fahrzeugbehandlung mit drehenden Rädern zu realisieren. In anderen Ausgestaltungen ist nur eine derartige Station vorgesehen.

## Patentansprüche

1. Förderbandeinrichtung zum Transportieren eines Fahrzeugs durch eine Fahrzeugbehandlungsanlage, insbesondere zum Transportieren eines Fahrzeugs durch eine Waschstraße (6), umfassend ein Förderband (2), auf welchem Räder wenigstens einer Seite eines transportierten Fahrzeugs für einen Transport stehen, **dadurch gekennzeichnet, dass** die Förderbandeinrichtung weiterhin umfasst:
mindestens eine Hubeinrichtung, mittels welcher das transportierte Fahrzeug in mindestens einem Schleppbetrieb-Abschnitt (I) der Fahrzeugbehandlungsanlage relativ zu dem Förderband (2) in eine Hubrichtung bewegbar ist, sodass das die Räder des transportierten Fahrzeugs außer Kontakt mit dem Förderband (2) kommen, und mindestens eine Mitnehmerrolle (4), mittels welcher das transportierte Fahrzeug über den Schleppbetrieb-Abschnitt (I) mit rollenden Rädern bewegbar ist.

2. Förderbandeinrichtung nach Anspruch 1, **dadurch gekennzeichnet, dass** das Förderband (2) mindestens zwei, vorzugsweise drei durch sich in Förderrichtung erstreckende Schlitze (24, 25) beabstandete Bandstränge (21, 22, 23) aufweist.

3. Förderbandeinrichtung nach Anspruch 2, **dadurch gekennzeichnet, dass** die Bandstränge (21, 22, 23) mittels Kopplungsmitteln mechanisch wirkverbunden sind.

4. Förderbandeinrichtung nach Anspruch 3, **dadurch gekennzeichnet, dass** die Kopplungsmittel zumindest teilweise durch die mindestens eine Mitnehmerrolle (4) gebildet sind.

5. Förderbandeinrichtung nach Anspruch 2, 3 oder 4, **dadurch gekennzeichnet, dass** wenigstens ein Bandstrang (21, 22) ein seitliches Führungselement (20) zum seitlichen Abstützen eines Rads aufweist.

6. Förderbandeinrichtung nach einem der Ansprüche 1 bis 5, **dadurch gekennzeichnet, dass** das Förderband (2) mit der mindestens einen Mitnehmerrolle (4) in antreibender Wirkverbindung steht, sodass die Mitnehmerrolle (4) mittels des Förderbands zur Bewegung in Förderrichtung angetrieben ist.

7. Förderbandeinrichtung nach einem der Ansprüche 2 bis 6, **dadurch gekennzeichnet, dass** die Hubeinrichtung mindestens eine Leiste (5) aufweist, welche durch einen Schlitz (24, 25) zwischen zwei Bandsträngen (21, 22, 23) des Förderbands (2) geführt ist.

8. Förderbandeinrichtung nach Anspruch 7, **dadurch gekennzeichnet, dass** die Hubeinrichtung mehrere, vorzugsweise zwei parallel beabstandete Leisten (5) umfasst.

9. Förderbandeinrichtung nach einem der Ansprüche 7 oder 8, **dadurch gekennzeichnet, dass** die Leisten (5) wenigstens an einem in Förderrichtung vorne angeordneten Bereich eine Einlaufschräge (50) aufweisen.

10. Förderband für eine Förderbandeinrichtung nach einem der Ansprüche 1 bis 9, umfassend mehrere, in Förderrichtung aufeinanderfolgend angeordnete Förderplatten.

11. Förderband nach Anspruch 10, **dadurch gekennzeichnet, dass** die Förderplatten quer zur Förderrichtung Unterbrechungen aufweisen.

12. Förderband nach Anspruch 10 oder 11, **dadurch gekennzeichnet, dass** an mindestens einer Förderplatte eine Mitnehmerrolle (4) angeordnet ist.

13. Waschstraße für Fahrzeuge mit einer Förderbandeinrichtung nach einem der Ansprüche 1 bis 9.

14. Verfahren zum Transportieren eines Fahrzeugs durch eine Fahrzeugbehandlungsanlage, insbesondere zum Transportieren eines Fahrzeugs durch eine Waschstraße (6), wobei das Fahrzeug mittels eines Förderbands (2) transportiert wird, das Fahrzeug in mindestens einem Schleppbetrieb-Abschnitt (I) der Fahrzeugbehandlungsanlage relativ zu dem Förderband (2) in eine Hubrichtung bewegt wird, sodass das die Räder des Fahrzeugs außer Kontakt mit dem Förderband (2) kommen, und das Fahrzeug über den Schleppbetrieb-Abschnitt mittels einer Mitnehmerrolle (4) mit rollenden Rädern bewegt wird.

## Claims

1. Conveyor belt device for transporting a vehicle through a vehicle treatment system, in particular for transporting a vehicle through a wash tunnel (6), comprising a conveyor belt (2) on which wheels of at least one side of a transported vehicle rest for transportation,
**characterized in that** the conveyor belt device further comprises:
at least one lifting device, by means of which the transported vehicle is movable in at least one drag operation section (I) of the vehicle treatment system relative to the conveyor belt (2) in one lifting direction such that the wheels of the transported vehicle come out of contact with the conveyor belt (2), and at least one carrier roller (4), by means of which the transported vehicle is movable across the drag operation section (I) with rolling wheels.

2. Conveyor belt device according to claim 1, **characterized in that** the conveyor belt (2) includes at least two, preferably three, belt strands (21, 22, 23) spaced by slots (24, 25) extending in the conveying direction.

3. Conveyor belt device according to claim 2, **characterized in that** the belt strands (21, 22, 23) are operatively connected by mechanical coupling means.

4. Conveyor belt device according to claim 3, **characterized in that** the coupling means are at least partially provided by the at least one carrier roller (4).

5. Conveyor belt device according to claim 2, 3 or 4, **characterized in that** at least one belt strand (21, 22) includes a lateral guiding element (20) for lateral supporting of a wheel.

6. Conveyor belt device according to any of claims 1 to 5, **characterized in that** the conveyor belt (2) is in driving operative connection with the at least one carrier roller (4) such that the carrier roller (4) is driven for movement in the conveying direction by means of the conveyor belt.

7. Conveyor belt device according to any of claims 2 to 6, **characterized in that** the lifting device includes at least one strip (5) which is led through a slot (24, 25) between two belt strands (21, 22, 23) of the conveyor belt (2).

8. Conveyor belt device according to claim 7, **characterized in that** the lifting device includes a plurality of, preferably two, strips (5) spaced in parallel.

9. Conveyor belt device according to any of claims 7 or 8, **characterized in that** the strips (5) have a slanted infeed (50) at least in a zone located in front in the conveying direction.

10. Conveyor belt for a conveyor belt device according to any of claims 1 to 9, comprising a plurality of conveyor plates arranged in succession in the conveying direction.

11. Conveyor belt according to claim 10, **characterized in that** the conveyor plates have gaps transversely to the conveying direction.

12. Conveyor belt according to claim 10 or 11, **characterized in that** on at least one conveyor plate a carrier roller (4) is arranged.

13. Wash tunnel for vehicles having a conveyor belt device according to any of claims 1 to 9.

14. Method for transporting a vehicle through a vehicle treatment system, in particular for transporting a vehicle through a wash tunnel (6), wherein the vehicle is transported by means of a conveyor belt (2), the vehicle is moved in at least one drag operation section (I) of the vehicle treatment system relative to the conveyor belt (2) in one lifting direction such that the wheels of the vehicle come out of contact with the conveyor belt (2), and the vehicle is moved across the drag operation section by means of a carrier roller (4) with rolling wheels.

## Revendications

1. Dispositif à bande transporteuse destiné à transporter un véhicule dans une installation de traitement de véhicule et en particulier à transporter un véhicule dans un parcours de lavage (6), le dispositif comprenant une bande transporteuse (2) sur laquelle les roues d'au moins un côté d'un véhicule à transporter sont placées en vue du transport,
**caractérisé en ce que** le dispositif à bande transporteuse comporte
en outre au moins un dispositif de levage au moyen duquel le véhicule transporté peut être déplacé dans une direction de levage par rapport à la bande transporteuse (2) dans au moins une section de remorquage (I) de l'installation de traitement de véhicule de telle sorte que les roues du véhicule transporté ne soient pas en contact avec la bande transporteuse (2) et au moins un galet d'entraînement (4) au moyen duquel le véhicule transporté peut être déplacé dans la section de remorquage (I) en roulant sur ses roues.

2. Dispositif à bande transporteuse selon la revendication 1, **caractérisé en ce que** la bande transporteuse (2) présente au moins deux et de préférence trois brins de bande (21, 22, 23) maintenus à distance mutuelle par des fentes (24, 25) qui s'étendent dans la direction du transport.

3. Dispositif à bande transporteuse selon la revendication 2, **caractérisé en ce que** les brins de bande (21, 22, 23) coopèrent mécaniquement au moyen de moyens d'accouplement.

4. Dispositif à bande transporteuse selon la revendication 3, **caractérisé en ce que** les moyens d'accouplement sont formés au moins en partie par le ou les galets d'entraînement (4).

5. Dispositif à bande transporteuse selon les revendications 2, 3 ou 4, **caractérisé en ce qu'**au moins un ruban de bande (21, 22) présente un élément latéral de guidage (20) qui soutient latéralement une roue.

6. Dispositif à bande transporteuse selon l'une des revendications 1 à 5, **caractérisé en ce que** la bande transporteuse (2) coopère à entraînement avec le ou les galets d'entraînement (4) de telle sorte que le galet d'entraînement (4) soit entraîné à se déplacer dans la direction de transport au moyen de la bande transporteuse.

7. Dispositif à bande transporteuse selon l'une des revendications 2 à 6, **caractérisé en ce que** le dispositif de levage présente au moins une latte (5) guidée dans les fentes (24, 25) situées entre deux brins de bande (21, 22, 23) de la bande transporteuse (2).

8. Dispositif à bande transporteuse selon la revendication 7, **caractérisé en ce que** le dispositif de levage comporte plusieurs et de préférence deux lattes (5) parallèles à distance mutuelle.

9. Dispositif à bande transporteuse selon l'une des revendications 7 ou 8, **caractérisé en ce que** les lattes (5) présentent une pente d'entrée (50) au moins dans une partie disposée en avant dans la direction du transport.

10. Bande transporteuse pour dispositif à bande transporteuse selon l'une des revendications 1 à 9, comprenant plusieurs plaques de transport disposées à la suite les unes des autres dans la direction du transport.

11. Bande transporteuse selon la revendication 10, **caractérisée en ce que** les plaques de transport présentent des interruptions dans la direction transversale à la direction du transport.

12. Bande transporteuse selon les revendications 10 ou 11, **caractérisée en ce qu'**un rouleau d'entraînement (4) est disposé sur au moins une plaque de transport.

13. Parcours de lavage de véhicules présentant un dispositif à bande transporteuse selon l'une des revendications 1 à 9.

14. Procédé de transport d'un véhicule dans une installation de traitement de véhicules et en particulier de transport d'un véhicule dans un parcours de lavage (6), le véhicule étant transporté au moyen d'une bande transporteuse (2), le véhicule étant déplacé dans une direction de levage par rapport à la bande transporteuse (2) dans au moins une section de remorquage (I) de l'installation de traitement de véhicules, de telle sorte que les roues du véhicule transporté ne soient pas en contact avec la bande transporteuse (2), et le véhicule transporté est déplacé dans la section de remorquage en roulant sur ses roues au moyen du galet d'entraînement (4).
